# EUROPEAN PATENT APPLICATION

(11) **EP 1 845 347 A2**
(43) Date of publication of application: **17.10.2007**
(21) Application number: 07075243.1
(22) Date of filing: 02.04.2007
(51) Int. Cl.: G01F 23/26

(54) **Capacitive liquid level sensor**

(30) Priority: 13.04.2006 US 403305
(71) Applicant: Delphi Technologies, Inc., Troy, Michigan 48007 (US)
(72) Inventor: Lin, Yingjie, El Paso, TX 79912 (US)
(74) Representative: Denton, Michael John

(57) **Abstract**

A sensing assembly senses a level of a fluid in a reservoir. The sensing assembly includes a first input port for receiving a first input voltage signal. The sensing assembly also includes a second input port for receiving a second input voltage signal. An excitation circuit is electrically connected to the first and second input ports for receiving the first and second input voltage signals and for generating a first excitation signal and a second excitation signal. A receiving circuit is disposed adjacent the excitation circuit and defines a variable capacitance with the excitation circuit. The receiving circuit produces an output voltage variable with the level of the fluid in the reservoir due to capacitance changes between the excitation circuit and receiving circuit. The receiving circuit includes first receiving electrode configured to effect linear capacitance change with fluid level and a second receiving electrode configured to effect second order linear capacitance change with fluid level. The receiving circuit produces an output voltage signal variable with the level of liquid in the reservoir due to capacitance changes between the excitation circuit and the receiving circuit due to dielectric changes created by the liquid.

## Description

### TECHNICAL FIELD

The present invention relates to fluid level sensing assemblies. More particularly, the invention relates to fluid level sensing assemblies capable of accurately determining the level of a fluid within a reservoir by analyzing output signals of the fluid level sensing assembly.

### BACKGROUND OF THE INVENTION

The storage and delivery of fluids is an important feature of many mechanisms. In an automotive environment, proper delivery of liquids is essential for the functioning and maintenance of a motor vehicle. By way of example, a motor vehicle will not function without fuel, typically liquid gasoline. That same motor vehicle will not function properly without the proper amount of oil stored in the internal combustion engine allowing it to lubricate and cool itself. These are just two fluids in a particular environment that require close observation to make sure its host mechanism, i.e., the motor vehicle, can operate properly.

Currently, there are a number of ways in which a fluid level may be measured. The mechanisms used to measure the fluid level help determine if more fluid is required in order to continue the proper maintenance and operation of the host mechanism. Fluid level measuring mechanisms include floating arm mechanisms, pressure sensors, capacitive sensors and ultrasonic sensors. The most commonly used fluid level measuring system is the floating arm mechanism.

The floating arm mechanism is an imperfect mechanism for several reasons. First, the floating arm mechanism requires moving parts inside a fluid-filled container. This requires increased time to install the floating arm mechanism and seal in the container or reservoir. Resistive strips used by the floating arm mechanism are susceptible of contamination and can develop contact problems. The contamination and contact problems result in erroneous measurements.

Packaging of an oil level sensor in the sump of an internal combustion engine is particularly problematic, given the harsh environmental conditions and limited space available. Although emersion type sensors have been considered, they have proven to be unreliable, difficult to package and service due to their location and size, as well as expensive and complex. Furthermore, the provision and sealing of electrical lead-outs is not satisfactorily resolved within the automotive industry.

Non-contact, no moving part liquid level sensors are preferred by automotive original equipment manufacturers (OEMs). Such sensors are typically applied within vehicle systems such as: fuel level, engine oil level, transmission oil level, engine coolant level and the like. Of the technologies applied to non-contact no moving part sensors, capacitance based level sensing due to its low cost, simplicity of design and flexibility of application.

In general, the capacitance level sensor needs to be calibrated for the known dielectric constant characteristics of the fluid being sensed or needs a reference measurement to enable for compensation for varying dielectric constant characteristics.

Examples of various fluid level measuring apparatus are found in U.S. Patent No. 6,497,144 to Y. Lin entitled Method for Measuring Fluid Level, U.S. Patent No. 6,498,566 to Y. Lin entitled Method for Measuring Fluid Level, U.S. Patent No. 6,502,460 to Y. Lin et al. entitled Fluid Level Measuring System, and U.S. Patent No. 6,895,807 to T. Han et al. entitled Apparatus and Method for Determining Oil Change Based Upon Oil Viscosity, all of which are owned by the assignee of the present application.

U.S. Patent No. 6,823,731 employs sine/cosine waves to compensate for fluid dielectric constant changes. The '731 sensor employs a subassembly of three side-by-side electrodes for applying sine wave signals and a second subassembly of three side-by-side electrodes for applying cosine wave signal. Although this approach provides satisfactory results, the overall size of the sensor assembly can be problematic in certain applications where packaging space is at a particular premium or accessibility is difficult.

In certain applications, such as engine oil level sensing, the OEMs have expressed an interest in replacing the traditional oil dip-stick with an electronic level sensor. To avoid expensive redesign and retooling of major engine components, it would be desirable to insert an oil level sensor through existing passageways leading to the engine oil sump. This requires an extreme degree of miniaturization of the sensor element.

It is, therefore, a primary object of the present invention to provide an improved capacitive fluid level sensor that is of compact design and flexible in configuration for convenient packaging in constrained environments or reservoirs. Furthermore, the present invention is of robust design for application in harsh environments and overcomes the known shortfalls of existing devices without adding to part count, manufacturing complexity or cost.

### SUMMARY OF THE INVENTION

A sensing assembly senses a level of a liquid in a reservoir. The sensing assembly includes a first input port for receiving a first input voltage signal. The sensing assembly also includes a second input port for receiving a second input voltage signal. An excitation circuit is electrically connected to the first and second input ports for receiving the first and second input voltage signals and for generating a first excitation signal and a second excitation signal. A receiving circuit is disposed adjacent the excitation circuit and defines a variable capacitance with the excitation circuit. The receiving circuit produces an output variable with the level of liquid in the reservoir due to capacitance changes between the excitation circuit and the receiving circuit. The capacitance changes are due to dielectric changes created by the presence of the liquid.

According to one aspect of the invention, the receiving circuit includes first and second receiving electrodes, which are adapted for extending along a portion of the reservoir. The first receiving electrode is configured with the first and second excitation electrodes to effect linear capacitance change with changing fluid level. The second receiving electrode is configured with the first and second electrodes to effect second order capacitance change with changing fluid level. The use of a pair of sensing elements, one of which generates two pieces of linear capacitance changes with the fluid level (the dC/dz is constant) and the other generates two pieces of second order curves (the dC/dz changes linearly) has the advantage of permitting a sensor configuration which lends itself to miniaturization and packaging flexibility.

According to yet another aspect of the invention, the excitation circuit includes first and second excitation electrodes extending along a portion of the reservoir, wherein the first excitation electrode is disposed adjacent the first receiving electrode and the second excitation electrode is disposed adjacent the second receiving electrode. This arrangement has the advantage of providing a self-compensating fluid dielectric constant.

According to still yet another aspect of the invention, the excitation circuit comprises a third excitation electrode disposed adjacent the first receiving electrode and a fourth excitation electrode disposed adjacent the second receiving electrode. This permits disposing the first excitation electrode adjacent the upper portion of the first receiving electrode and the third excitation electrode adjacent the lower portion of the first receiving electrode, and simultaneously disposing the second excitation electrode adjacent the upper portion of the second receiving electrode and the fourth excitation electrode adjacent the lower portion of the second receiving electrode. This arrangement eliminates any ambiguity in sensed fluid level.

According to another aspect of the invention, the first and second receiving electrodes comprise a plurality of receiving electrode segments, and the first and second excitation electrodes comprise a plurality of excitation electrode segments, wherein the first receiving and first excitation electrode segments are interdigitated to collectively define a first shaped region, and the second receiving and second excitation electrode segments collectively define a second shaped region. This arrangement further enhances miniaturization and packaging of the sensor assembly.

These and other features and advantages of this invention will become apparent upon reading the following specification, which, along with the drawings, describes a preferred embodiment of the invention in detail.

### BRIEF DESCRIPTION OF THE DRAWINGS

Although the drawings represent a single embodiment of the present invention, the drawings are not necessarily to scale and certain features may be exaggerated in order to better illustrate and explain the present invention. The exemplification set forth herein illustrates an embodiment of the invention, in one form, and such exemplifications are not to be construed as limiting the scope of the invention in any manner.
FIG. 1, is a broken, cross-sectional end plan view of the preferred embodiment of the capacitive fluid level sensor of the present invention employed within the oil sump of an automotive internal combustion engine;
FIG. 2, is a broken, cross-sectional view of the capacitive fluid level sensor and oil sump from FIG. 1, on an enlarged scale;
FIG. 3, is a front plan view of the electrode assembly of the capacitive fluid level sensor of FIG. 1, on a greatly enlarged scale;
FIG. 4, is a rear plan view of the electrode assembly of FIG. 3;
FIG 5, is a graphic representation of characteristic dC/dz with changing fluid level for the electrodes depicted in FIG. 3 and FIG. 4;
FIG. 6, is a graphic representation of integrated characteristic dC/dz with changing fluid level for the electrodes depicted in FIG. 3 and FIG. 4;
FIG. 7, is a graphic representation of the ratio of integrated characteristic dC/dz for the electrode depicted in FIG. 4 over integrated characteristic dC/dz for the electrode depicted in FIG. 3 with changing fluid level; and
FIG. 8, is a schematic diagram of an electrical circuit employed by the present invention.

### DESCRIPTION OF THE PREFERRED EMBODIMENT

The present invention describes a capacitance based fluid level sensor, which is intended for application in varied automotive systems and will be described in that context. It is to be understood, however, that the present invention could be successfully applied in many other applications. Accordingly, the claims herein should not be deemed limited to the specifics of the preferred embodiment of the invention described hereunder.

The present invention employs a sensing element design and corresponding signal calculation methodology, which, in certain respects, provides a similar result to the apparatus described in U.S. Patent No. 6,823,731. Accordingly, the specification and related teachings of U.S. Patent No. 6,823,731 is hereby incorporated herein by reference.

More specifically, the preferred application of the present invention is measuring engine oil level in the sump of an automobile engine. To avoid the necessity of redesigning the engine itself, the inventive sensor design uses miniaturization of the sensor element to permit insertion through existing passageways, particularly the engine oil dip-stick guide tube, which typically communicates directly with the sump.

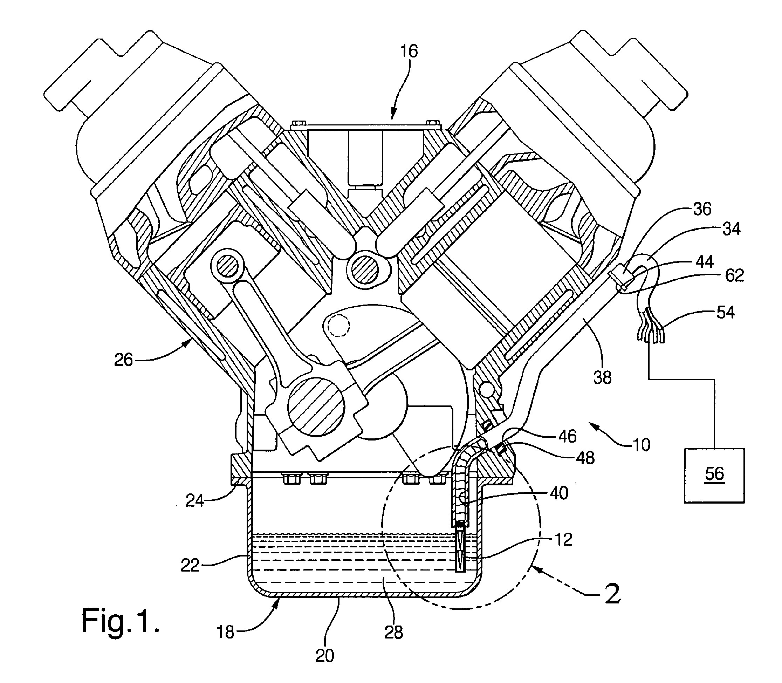

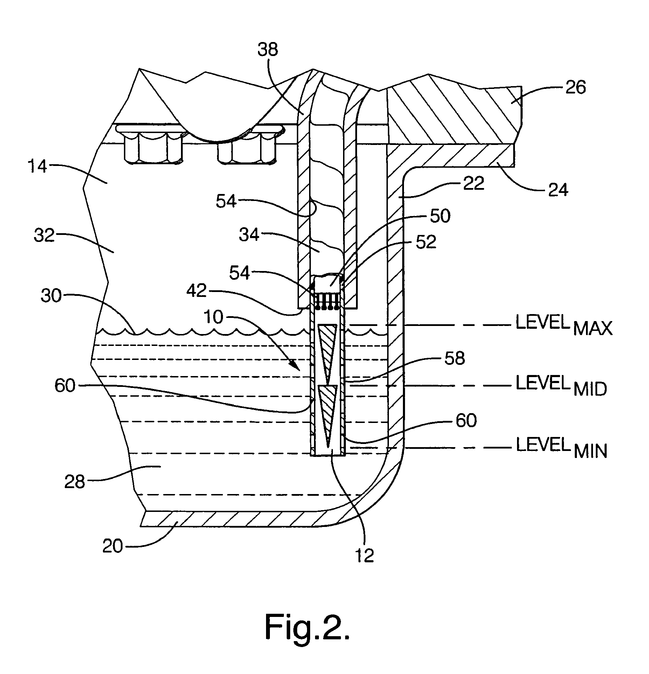

Referring to Figures 1 and 2, the present invention, a sensor assembly, is generally indicated at 10. A sensor element 12 of the sensor assembly 10 is mounted to a reservoir 14, such as an oil sump of an internal combustion engine 16. The reservoir 14 is encompassed by the engine oil pan 18, which defines a bottom wall 20 and a plurality of upstanding side walls 22 terminating in flanges 24 which are sealingly affixed to the block 26 of the engine 16. An engine driven pump (not illustrated) draws fluid 28 such as lubricating oil from the reservoir 14 for circulation throughout the engine 16, filtering and ultimately return to the reservoir 14 for storage therein. The fluid 28 defines a level 30 that is to be sensed by sensor assembly 10. Typically, air 32 fills the portion of the reservoir 14 not occupied by the fluid 28. The level 30 of the fluid 28 will vary over time as the result of consumption during operation of engine 16, leakage and/or replacement and supplementation.

Sensor assembly 10 comprises an elongated body 34 interconnecting the sensor element 12 with an external termination seal 36. The elongated body 34 of sensor assembly 10 is constructed from materials providing relative rigidity along its characteristic line of elongation and radial flexibility, allowing its slip-fit insertion into a tortuously shaped dip-stick guide tube 38. All elements of sensor assembly are selected to ensure reliable operation in the harsh, high temperature environment of an internal combustion engine 16.

Guide tube 38 is preferably of conventional design, providing a small diameter (typically 10-15 mm inside diameter) passageway 40 extending between a lower end 42 and an upper end 44. An axially intermediate portion of guide tube 38 extends through a passageway 46 within engine block 26 to provide external assess to the upper end 46 of guide tube 38. An o-ring seal 48 is provided at the interface between guide tube 38 and engine block 26 within passageway 46. The portion of guide tube 38 disposed within engine 16 is dressed near the block 26 to avoid contact with rotating or moving engine crank, oil pump or related engine components.

The lower end 42 of guide tube 38 opens generally vertically downwardly within reservoir 14 approximately adjacent the uppermost design intent level (Level-max) assumed by the engine oil 28 during operation of the host vehicle (not illustrated). The lowermost design intent level (Level-min) assumed by engine oil 28 during operation of the host vehicle is near bottom wall 20 of oil pan 18. An intermediate point representing a 50% fill level of engine oil is designated Level-mid.

The elongated body 34 of sensor assembly 10 has a resilient inner core 50 of foam or suitable electrically insulating material and a protective outer jacket 52 extending through the axial length thereof. A plurality of insulated electrical conductors 54 are disposed within inner core 50 for interconnecting the sensor element 12 within the reservoir 14 with an external control circuit 56, as will be described in greater detail herein below.

Sensor element 12 is mounted within an anti-slosh tube 58, which, in turn, is carried by an exposed portion of inner core 50 of elongated body 34. Sensor element 12 and anti-slosh tube 58 extend downwardly within the reservoir 14 below the lower end 42 of the guide tube 38 to define a sensing region therein extending between Level-max and Level-min. Anti-slosh tube 58 has a series of small openings 60 distributed axially there along to control the flow of oil 28 there through and thereby mitigate the short term or transitory effects of oil level changes resulting from vehicle motion induced agitation.

The termination seal provides two distinct functions. First, when positioned as illustrated in Figure 1, it simultaneously prevents intrusion of water or atmospherically borne contaminants into the reservoir and the egress of engine oil. Second, it defines an enlarged head portion forming a stop surface 62, which precisely axially positions the elongated body 34 within the guide tube 38, and thus precisely locates the sensor element 12 within the sensing region of the reservoir 14.

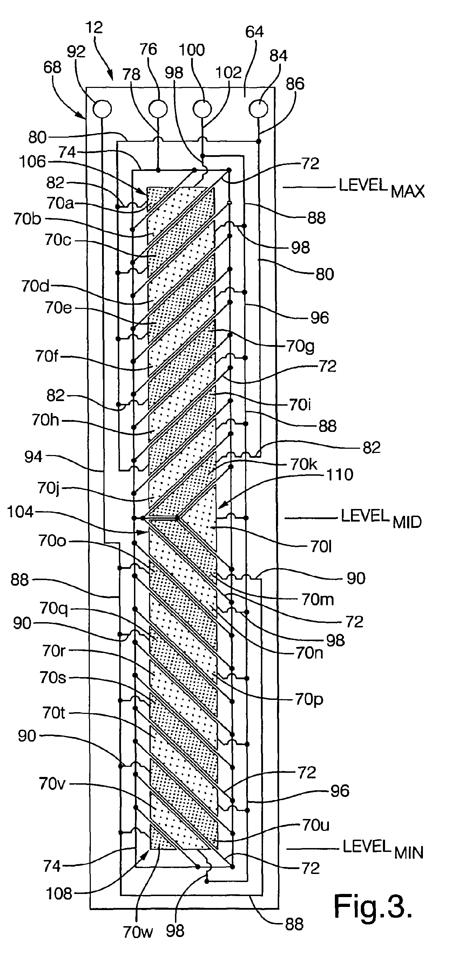

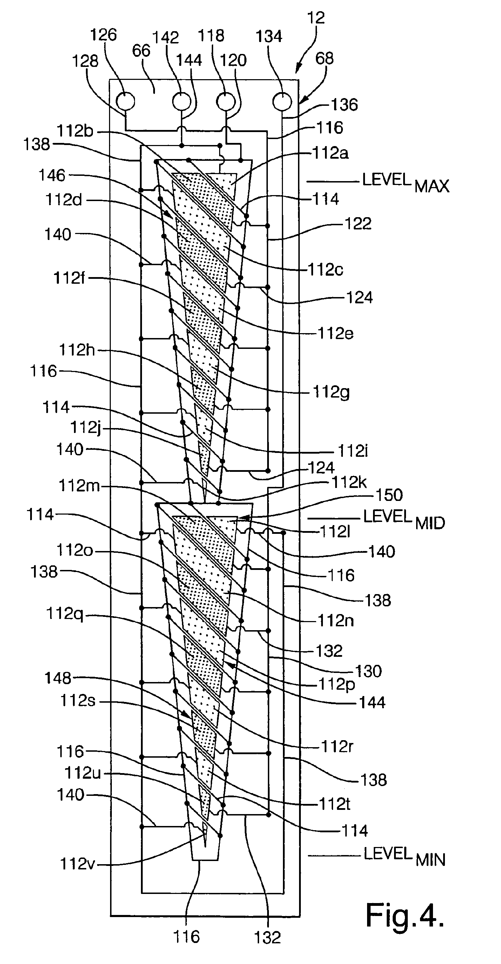

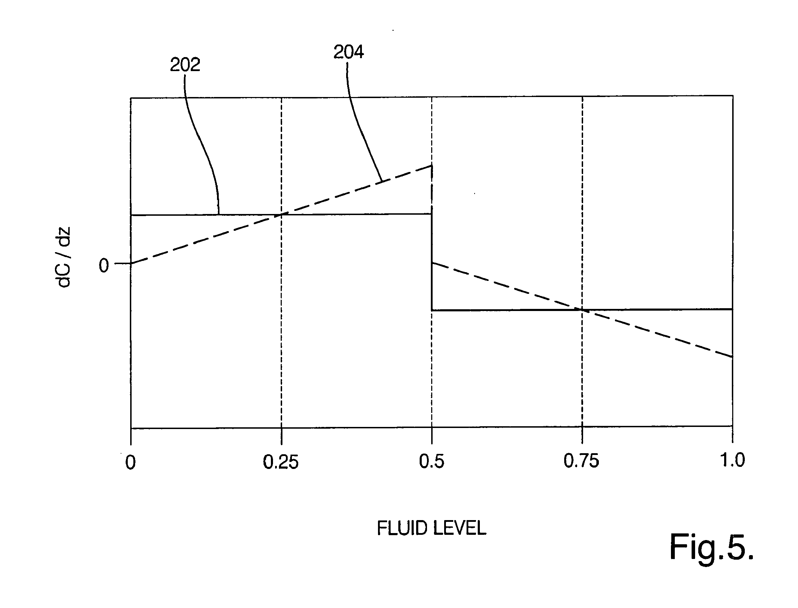

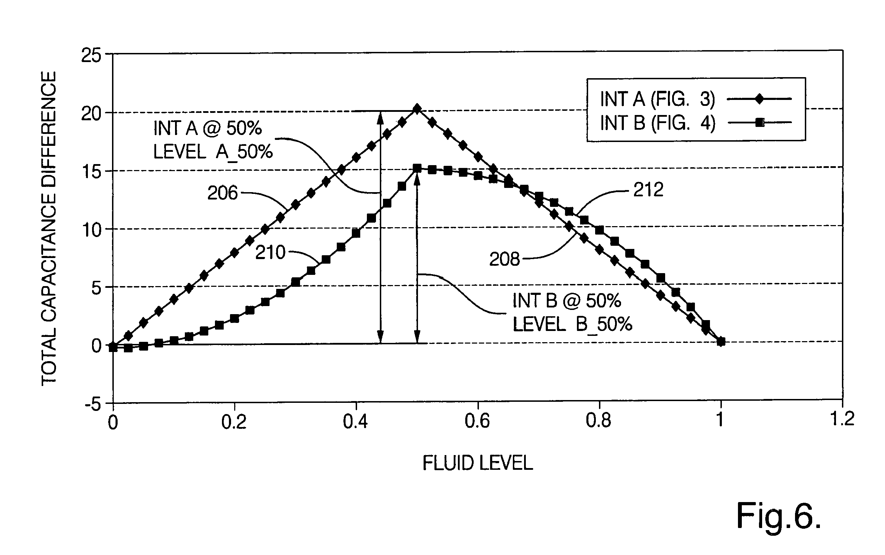

Referring to figures 3 and 4, the front and back surfaces 64 and 66, respectively, of a single substrate 68 are illustrated. The substrate 68 is used to mount circuitry, as will be discussed herein below. The substrate can be constructed of ceramic, fiber reinforced plastic composites or other suitable materials. Although only a single substrate is disclosed, it is contemplated that multiple substrates can be employed, with or without intermediate spacing, to further isolate the circuitry depicted in Figures 3 and 4 without departing from the spirit of the invention. Furthermore, surfaces 64 and 66 are substantially regular and flat. However, it is contemplated that other geometric configurations could be employed without departing from the spirit of the invention. This is particularly important in adapting to application specific packaging restraints and requirements.

Referring to Figure 3, a plurality of geometrically (triangular, trapezoidal, parallelogram) shaped electrode segments designated 70a - 70w are arranged in a generally elongated rectangular configuration on front surface 64 of substrate 68. Adjacent segments 70 are interspaced by circuit traces 72. Circuit traces 72 function as ground guard lines. Each end of each circuit trace 72 is connected to a circumferential circuit trace 74, which, itself, is interconnected to a terminal pad 76 by a tie line trace 78. In application, terminal pad 76 is connected to chassis or earth ground to reduce parasitic voltages that may be created from the sensor element 12 during operation thereof.

Alternating electrode segments 70a, 70c, 70e, 70g, 70i and 70k are each interconnected to a circumferential circuit trace 80 by a respective tie line trace 82. Circumferential circuit trace 80 is interconnected to a terminal pad 84 by a tie line trace 86. Similarly, alternating electrode segments 70m, 70o, 70q, 70s, 70u and 70w are each interconnected to a circumferential circuit trace 88 by a respective tie line trace 90. Circumferential circuit trace 88 is interconnected to a terminal pad 92 by a tie line trace 94. Finally, alternating electrode segments 70b, 70d, 70f, 70h, 70j, 701, 70n, 70p, 70r, 70t and 70v are each interconnected to a circumferential circuit trace 96 by a respective tie line trace 98. Circumferential circuit trace 96 is interconnected to a terminal pad 100 by a tie line trace 102.

Electrode segments 70a - 70w collectively constitute a composite of three distinct electrodes as will be described in detail herein below. The footprint or region 104 of electrode segments 701 - 70w is vertically elongated, which, in the application described in connection with Figures 1 and 2 hereinabove, extends between oil Level-max and Level-min. Level-mid bifurcates region 104.

Electrode segments 70a - 70w, as well as their supportive substrate 68 and respective interconnecting circuit traces can be miniaturized and proportioned to fit within the inner diameter of passageway 40 defined by guide tube 38. Although the circuit elements of sensor 12 are depicted on a single plane defined by first surface 64 for purposes of descriptive clarity, other known second and multi-layer electronic circuit architecture can be implemented to provide interconnections between the electrode segments 70a - 70w and terminal pads 76, 84, 92 and 100.

Electrode segments 70a, 70c, 70e, 70g, 70i and 70k function as a single excitation electrode 106, which extends between Level-max and Level-mid. Electrode segments 70m, 70o, 70q, 70s, 70u and 70w function as a single excitation electrode 108, which extends between Level-mid and Level-min. Electrode segments 70b, 70d, 70f, 70h, 70j, 701, 70n, 70p, 70r, 70t and 70v function as a single receiving electrode 110, which extends between Level-max and Level-min.

Referring to Figure 4, a plurality of geometrically (irregular triangular and trapezoidal) shaped electrode segments designated 112a - 112v are arranged in a generally elongated repeating tapered configuration on back surface 66 of substrate 68. Adjacent segments 112 are interspaced by circuit traces 114 functioning as ground guard lines. Each end of each circuit trace 114 is connected to a circumferential circuit trace 116, which, itself, is interconnected to a terminal pad 118 by a tie line trace 120. In application, terminal pad 118 is connected to chassis or earth ground.

Alternating electrode segments 112b, 112d, 112f, 112h and 112j are each interconnected to a circumferential circuit trace 122 by a respective tie line trace 124. Circumferential circuit trace 122 is interconnected to a terminal pad 126 by a tie line trace 128. Similarly, alternating electrode segments 112m, 112o, 112q, 112s and 112u are each interconnected to a circumferential circuit trace 130 by a respective tie line trace 132. Circumferential circuit trace 130 is interconnected to a terminal pad 134 by a tie line trace 136. Finally, alternating electrode segments 112a, 112c, 112e, 112g, 112i, 112k, 1121, 112n, 112p, 112r, 112t and 112v are each interconnected to a circumferential circuit trace 138 by a respective tie line trace 140. Circumferential circuit trace 138 is interconnected to a terminal pad 142 by a tie line trace 144.

Electrode segments 11 2a - 112v collectively constitute a composite of three distinct electrodes as will be described in detail herein below. The footprint or region 144 of electrode segments 112a - 112v is vertically elongated, which, in the application described in connection with Figures 1 and 2 herein above, extends between oil Level-max and Level-min. Level-mid bifurcates region 144.

Electrode region 104 on substrate front surface 64 (Figure 3) registers with electrode region 144 on substrate back surface 66 (Figure 4).

Electrode segments 112b, 112d, 112f, 112h and 112j function as a single excitation electrode 146, which extends between Level-max and Level-mid. Electrode segments 112m, 112o, 112q, 112s and 112u function as a single excitation electrode 148, which extends between Level-mid and Level-min. Electrode segments 112a, 112c, 112e, 112g, 112i, 112k, 1121, 112n, 112p, 112r, 112t and 112v function as a single receiving electrode 150, which extends between Level-max and Level-min.

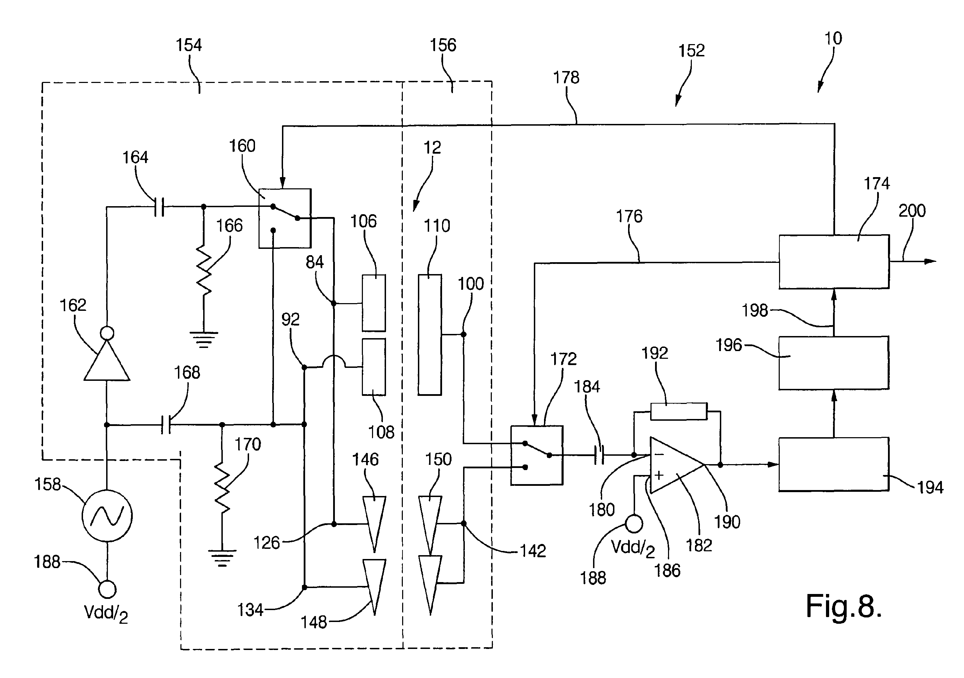

Referring to Figure 8, an electrical circuit, shown generally at 152, is in-circuit with sensor element 12. The electrical circuit 152 includes an excitation circuit 154 and a receiver circuit 156. The excitation circuit 154 has sinusoid wave input from signal generator 158. The whole circuit, including excitation circuit 154, the receiver circuit 156, signal generator 158, and signal condition circuit, is powered by a separate DC source (not illustrated). The excitation circuit 154 includes excitation electrodes 106, 108, 146 and 148. Excitation electrodes 106 and 146 are electrically interconnected via terminal pads 84 and 126, respectively. Excitation electrodes 108 and 148 are electrically interconnected via terminal pads 92 and 134, respectively.

The output of signal generator 158 is interconnected with one input terminal of a select switch 160 through a series connected analog inverter 162 and a DC blocking capacitor 164. The first input terminal of select switch 160 is connected to ground through a DC reset resistor 166. The output of signal generator 158 is also interconnected to the second input terminal of select switch 160, as well as terminal pads 92 and 134 of excitation electrodes 108 and 148, respectively, through a DC blocking capacitor 168. The second input terminal of select switch 160 is also connected to ground through a DC reset resistor 170. The output terminal of select switch 160 is connected to terminal pads 84 and 126 of excitation electrodes 106 and 146, respectively.

Terminal pad 100 of receiving electrode 110 is connected to the first input terminal of a second select switch 172. Terminal pad 142 of receiving electrode 150 is connected to the second input terminal of select switch 172. Select switch 172 is controlled by an analog switch control signal received from an A/D converter & micro-controller 174 via a conductive line 176. Select switch 160 is similarly controlled by an analog switch control signal received from A/D converter & micro-controller 174 via a line 178. The select switch 172 makes the signal conditioning portion of the receiver circuit 156 have the ability to alternate receiving signals from receiving electrode 110 associated with the front surface 60 of sensor element 12, and from receiving electrode 150 associated with the back surface 66 of sensor element 12.

The output terminal of select switch 172 is interconnected to the negative input terminal 180 of an amplifier 182 through a DC blocking capacitor 184. The positive input terminal 188 of amplifier 182, as well as the input of signal generator 158, is connected to a DC voltage source 188 designated Vdd/2. The output terminal 190 of amplifier 182 is interconnected to the negative input terminal 180 of amplifier 182 by a feedback impedance 192, which in combination with the amplifier 182, forms a current-to-voltage converter stage.

The output terminal 190 of amplifier 182 feeds an AC to DC converter 194, which, in turn, feeds a DC amplifier 196. The DC amplifier 196 feeds an input signal to A/D converter & micro-controller 174 via line 198. An output line 200 from the A/D converter & micro-controller 174 feeds an output signal indicative of the level of fluid (oil) in the reservoir 14 to the control circuit 56 (Figure 1) of the associated host vehicle. An unbalanced current caused by an unbalanced capacitance between the receiving electrodes and their respective excitation electrodes generates a voltage at output terminal 190. The AC voltage signal is then fed to AC/DC converter 194. The converted amplified signal is then fed to the analog-to-digital converter port of micro-controller 174. The micro-controller 174 selects the state of switches 160 and 172.

Referring to Figure 8, the sensor element 12 includes the receiving circuit 156. The receiving circuit 156 is disposed adjacent the excitation circuit 154 and, together with the excitation circuit 154, defines a variable capacitance for the sensing assembly 10.

Excitation electrodes 106 and 108, and receiving electrode 110 are illustrated in Figure 8 in a discrete spaced apart grouping. Likewise, excitation electrodes 146 and 148, and receiving electrode 150 are illustrated in Figure 8 in a separate discrete spaced apart grouping. For the sake of clarity, the juxtaposition of electrodes depicted in Figure 8 is schematic in nature. In the preferred embodiment of the present invention, the electrodes in each grouping are superimposed with alternating interdigitated electrode segments 70a - 70w and 112a - 112v as best depicted in Figures 3 and 4, respectively.

The receiving circuit 156 produces an output voltage signal, which identifies the level 30 of the fluid 28 in the reservoir 14. The output voltage signal varies with the level 30 of the fluid 28 in the reservoir 14 due to capacitance changes between the excitation circuit 154 and the receiving circuit 156 due to dielectric changes created by the presence or absence of the fluid 28 along portions of the sensor element 12.

The receiving circuit 156 includes receiving electrodes 110 and 150. The first receiving electrode 110 is superimposed with both excitation electrodes 106 and 108. Likewise, the receiving electrode 150 is superimposed with both excitation electrodes 146 and 148. The electrode segments 70 comprising receiving electrode 110 collectively extend along a linear path between minimum and maximum fluid fill levels within reservoir 14 and are of a constant width. In contrast, the electrode segments 112 comprising receiving electrode 150 collectively extend along a linear path between minimum and maximum fluid fill levels within reservoir 14, but are of continuously varying width. The output voltage signal is transmitted to control circuit 56 via conductors 54 for analysis to determine the current level 30 of fluid 28 within the reservoir 14.

The receiving circuit 156 generates a composite output voltage signal comprising two components. The first component is a first output signal generated by receiving electrode 110. The second component is a second output voltage signal generated by receiving electrode 150. When the control circuit 56 receives each of the first and second output control signals, it can map the values of each of these signals to determine the percentage of fluid 28 in the reservoir 14 to determine the level 30 of the fluid 28 therein. Two signals are required because a reading of one signal would produce two potential level readings because each of the output signals repeat through a single cycle of measurements. As in the case of the system described in U.S. 6,823,731, the preferred embodiment of the present invention is self-balanced. However, the present invention has the advantage that both electrodes are positive. They are naturally balanced at both Level-min and Level-max. The total capacitance select switch 160 can be employed to distinguish between Level-min and Level-max.

Figure 5 illustrates the change of capacitance (dC/dz) at fluid fill levels varying from 0 (Level-min) to 1 (Level-max) for the electrode arrays depicted in Figures 3 and 4. Specifically, for the rectangular array of excitation electrodes 106 and 108, and receiving electrode 110 of Figure 3, the characteristic dC/dz 202 will be a finite positive constant value at fill levels between 0.0 (Level-min) and 0.5 (Level-mid) and a finite negative constant value at fill levels between 0.5 (Level-mid) and 1.0 (Level-max). For the double triangular shaped array of excitation electrodes 146 and 148, and receiving electrode 150 of Figure 4, the characteristic dC/dz 204 is a second order positively sloped curve at fill levels between 0.0 (Level-min) and 0.5 (Level-mid) and a second order negatively sloped curve at fill levels between 0.5 (Level-mid) and 1.0 (Level-max). Restated, the electrode array of Figure 3 generates two discrete ranges of linear capacitance with the fluid level (the dC/dz change is constant), and the electrode array of Figure 4 generates two discrete ranges of second order curves (the dC/dz change is linear constant).

Figure 6 illustrates the integrated responses of Figure 5 wherein the array of electrodes 106, 108 and 110 of sensor element 12 of Figure 3 produces a constant positive slope characteristic 206 throughout fluid level range 0.0 to 0.5 and a constant negative slope characteristic 208 throughout fluid level range 0.5 to 1.0, and the array of electrodes 146, 148 and 150 of sensor element 12 of Figure 4 produces a first order increasing rate curve characteristic 210 throughout fluid level range 0.0 to 0.5 and a first order decreasing rate curve characteristic 212 throughout fluid level range 0.5 to 1.0. Both characteristics reach their apex at the 0.5 (Level-mid) level. However, asymmetries could be added to the various electrode arrays to provide a skew of varied characteristic.

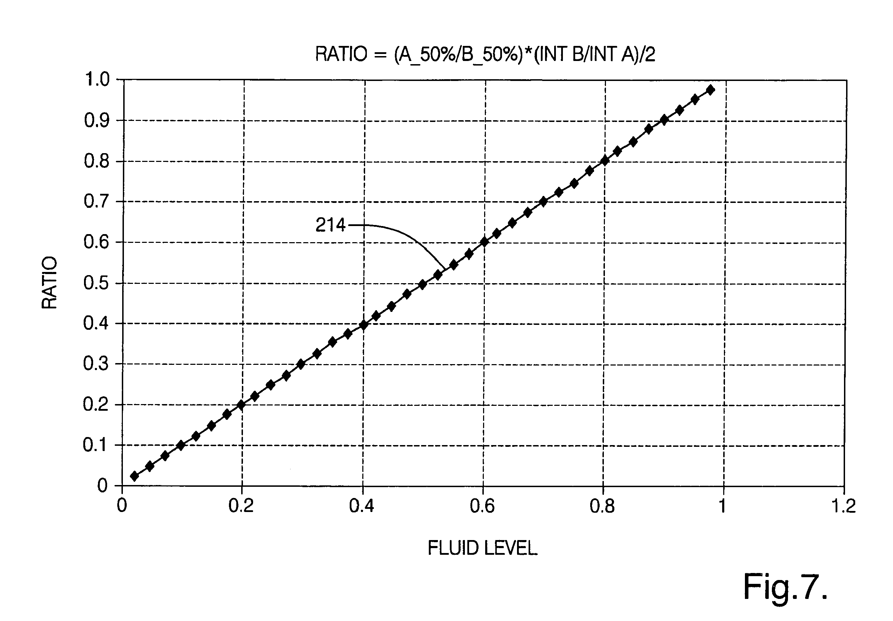

Figure 7 depicts the ratio of the integrated dC/dz from Figure 6 for the electrode arrays of Figures 3 and 4 where Ratio = (A_50%/B_50%)*(int B/int A)/2. The A_50%B_50% is a constant calibration number which is determined by the dimension of the electrodes shown in Figure 3 and Figure 4. The ratio characteristic 214 is a constant slope throughout the 0.0 (Level-min) to 1.0 (Level-max) range. This greatly simplifies the downstream control circuit signal processing requirements and complexity.

Definitionally, for purposes of interpreting this specification, the terms "port" and "contact pad" are deemed to be synonymous. Furthermore, the sensed medium in the reservoir can be a fluid as well as a liquid. Therefore, these terms are deemed synonymous for purposes of interpretation of the claims.

It is to be understood that the invention has been described with reference to a specific embodiment with variations to provide the features and advantages previously described and that the embodiment is susceptible of modification as will be apparent to those skilled in the art.

Furthermore, it is contemplated that many alternative, common inexpensive materials can be employed to construct the basic constituent components. Accordingly, the forgoing is not to be construed in a limiting sense.

The invention has been described in an illustrative manner, and it is to be understood that the terminology, which has been used is intended to be in the nature of words of description rather than of limitation.

Obviously, many modifications and variations of the present invention are possible in light of the above teachings. It is, therefore, to be under stood that within the scope of the appended claims, wherein reference numerals are merely for illustrative purposes and convenience and are not in any way limiting, the invention, which is defined by the following claims as interpreted according to the principles of patent law, including the Doctrine of Equivalents, may be practiced otherwise than is specifically described.

## Claims

1. A sensing assembly for sensing a level of a liquid in a reservoir, said sensing assembly comprising:
a first input for receiving a first input voltage signal;
a second input for receiving a second input voltage signal;
an excitation circuit electronically connected to said first and second inputs for receiving the first and second input voltage signals and for generating a first excitation signal and a second excitation signal; and
a receiving circuit disposed adjacent said excitation circuit defining a variable capacitance with said excitation circuit, wherein said receiving circuit includes first and second receiving electrodes adapted for extending along a portion of said reservoir, wherein said first receiving electrode is configured to effect linear capacitance change with fluid level, and said second receiving electrode is configured to effect a second order linear capacitance change with fluid level, said receiving circuit producing an output voltage signal variable with the level of liquid in the reservoir due to capacitive changes between said excitation circuit and said receiving circuit due to dielectric changes created by the liquid.

2. The sensing assembly of claim 1, wherein said excitation circuit comprises first and second excitation electrodes extending along a portion of the reservoir, said first excitation electrode disposed adjacent to said first receiving electrode and said second excitation electrode disposed adjacent to said second receiving electrode.

3. The sensing assembly of claim 2, wherein said excitation circuit comprises a third excitation electrode disposed adjacent said first receiving electrode and a fourth excitation electrode disposed adjacent said second receiving electrode.

4. The sensing assembly of claim 3, wherein said first excitation electrode is disposed adjacent an upper portion of said first receiving electrode, said third excitation electrode is disposed adjacent a lower portion of said first receiving electrode, said second excitation electrode is disposed adjacent an upper portion of said second receiving electrode, and said fourth excitation electrode is disposed adjacent a lower portion of said second receiving electrode.

5. The sensing assembly of claim 3, wherein said first excitation electrode is disposed substantially vertically above said third excitation electrode, and said second excitation electrode is disposed substantially vertically above said fourth excitation electrode.

6. The sensing assembly of claim 2, wherein said first excitation electrode and first receiving electrode are similarly shaped and dimensioned, and said second excitation electrode and receiving electrode are similarly shaped and dimensioned.

7. The sensing assembly of claim 2, wherein said first and second receiving electrodes each comprise a plurality of receiving electrode segments, and said first and second excitation electrodes each comprise a plurality of excitation electrode segments, wherein said first receiving and first excitation electrode segments are interdigitated to collectively define a first shaped region.

8. The sensing assembly of claim 7, wherein said second receiving and second excitation electrode segments are interdigitated to collectively define a second shaped region.

9. The sensing assembly of claim 8, wherein said first and second regions are registered with one another and are generally vertically elongated to extend between a maximum sensed liquid level and a minimum sensed liquid level.

10. The sensing assembly of claim 8, wherein said first shaped region is a vertically elongated rectangle.

11. The sensing assembly of claim 8, wherein said second shaped region is a vertically elongated continuously tapered geometric configuration.

12. The sensing assembly of claim 11, wherein said second shaped region comprises at least one vertically elongated triangle.

13. The sensing assembly of claim 8, wherein said first and second shaped regions are disposed on opposed front and rear surfaces of a substrate formed of electrically non-conductive material.

14. The sensing assembly of claim 8, further comprising traces extending between adjacent electrode segments, wherein each said trace is electrically connected to ground.

15. The sensing assembly of claim 1, further comprising a switch for selectively reading an output voltage signal from each of said first and second receiving electrodes.

16. The sensing assembly of claim 1, further comprising an amplifier for receiving each of said first and second excitation signals and for producing an imbalance current.
